# FASCICULE DE BREVET EUROPEEN

(11) **EP 0 634 732 B1**
(45) Date de publication et mention de la délivrance du brevet: **25.08.1999**
(21) Numéro de dépôt: 94401581.7
(22) Date de dépôt: 08.07.1994
(51) Int. Cl.: G06K 19/18

(54) **Carte souple équipée d'un dispositif de contrôle de validité**
Biegsame Karte mit einer Einrichtung zur Gültigkeitskontrolle
Flexible card with a device for validity control

(30) Priorité: 16.07.1993 FR 9308759
(43) Date de publication de la demande: 18.01.1995
(73) Titulaire: IDMATICS S.A., F-92700 Colombes (FR)
(72) Inventeur: Lehureau, Jean-Claude, Thomson-CSF, F-92402 Courbevoie cédex (FR); Massie, Francis, Thomson-CSF, F-92402 Courbevoie cédex (FR); Bricot, Claude, Thomson-CSF, F-92402 Courbevoie cédex (FR)
(74) Mandataire: Guérin, Michel

(56) Documents cités:
- EP-A- 0 166 273
- FR-A- 2 554 122
- US-A- 4 792 667
- PATENT ABSTRACTS OF JAPAN vol. 14, no. 228 (M-0973) 15 Mai 1990 & JP-A-02 057 396 (SONY CORP.) 27 Février 1990
- PATENT ABSTRACTS OF JAPAN vol. 17, no. 10 (P-1466) 8 Janvier 1993 & JP-A-04 241 236 (VICTOR CO OF JAPAN LTD) 28 Août 1992

## Description

Le domaine de l'invention est celui des cartes comportant des informations officielles type carte d'identité, carte de séjour, carte de crédit.

Plus précisément, il s'agit de cartes dont la validité peut être authentifiée grâce à la configuration même de la carte, sans recours à l'utilisation de matériel complémentaire. En effet les cartes selon l'invention incluent un dispositif de contrôle de validité, activable par une simple action extérieure de type flexion mécanique.

Il a été proposé selon l'art antérieur des cartes souples comprenant un système de validité qui comprend insérée entre deux électrodes souples : une structure comportant une couche de matériau piézoélectrique décrite notamment dans la demande EP A 0166 273. Il a également été proposé des cartes possédant une structure à base de matériau électrooptique capable de commuter électriquement entre deux états optiques différents (JP A 02057396).

Actuellement les dispositifs permettant de tester la validité d'une carte font appel à un matériel complémentaire perfectionné de vérification. Il peut s'agir notamment de cartes pouvant contenir une piste d'identification magnétique qui supposent un moyen de lecture et une interrogation de fichiers. Ces cartes peuvent comprendre des éléments fluorescents, identifiables au moyen d'une lampe UV ou des mécanismes multiphotons dans des terres rares qui nécessitent l'utilisation d'un laser à une longueur d'onde spécifique. L'utilisation d'hologrammes permet également de contrôler des cartes, néanmoins ces hologrammes sont aisément reproductibles dès que le premier a été réalisé.

C'est pourquoi l'invention propose un type de carte souple, dont la simple flexion permet de faire apparaître une information ; l'apparition ou non de cette information attestant ou non de la validité de la carte. Cette apparition se produit au niveau de la carte et peut typiquement se manifester par le passage d'un état diffusant à un état transparent, auquel peut également se superposer un état diffractant ou diffusant, la structure de la carte souple permettant d'envisager différents changements d'états optiques pouvant être détectés à l'oeil nu. Plus précisément, selon l'invention il s'agit d'une carte

souple équipée d'un dispositif de contrôle de validité, le dispositif de contrôle comportant insérée entre des électrodes souples, une première structure comprenant au moins une couche de matériau piézoélectrique et capable de générer des charges sous l'effet d'une contrainte de type pression, caractérisé en ce que le dispositif de contrôle de la carte comporte en outre :
- une seconde structure capable de commuter électriquement entre deux états optiques en réponse auxdites charges,
- lesdites première et seconde structures étant connectées électriquement afin de transférer lesdites charges générées par la première structure au niveau de la seconde structure.
Ainsi grâce à la présence d'un matériau piézoélectrique capable de générer des charges sous l'effet d'une contrainte mécanique, type pression, il est possible en transférant ces charges au niveau de la seconde structure S₂ de générer le changement d'états optiques. Les structures S₁ et S₂ peuvent avantageusement être juxtaposées dans un même plan, des électrodes continues de part et d'autre de ces structures assurant le transfert des charges depuis le matériau piézoélectrique jusqu'au matériau électrooptique.

Le matériau électrooptique peut être de type matériau composite à base de polymère dans lequel sont dispersées des billes de cristal liquide, capables de passer d'un état diffusant à un état transparent sous l'effet d'un champ électrique, ou inversement d'un état transparent à un état diffusant.

Le cristal liquide peut avantageusement être un nématique présentant des particules oblongues s'orientant parallèlement à un axe privilégié. L'ellipsoïde des indices de telles molécules ne présente pas de symétrie sphérique et l'on définit classiquement deux indices optiques, l'indice optique ordinaire nₒ dans une direction perpendiculaire au grand axe de la molécule et l'indice extraordinaire nₑ dans une direction parallèle. Ainsi en choisissant un matériau cristal liquide ayant un indice nₒ identique à celui de la matrice polymère, il est possible d'obtenir un état transparent sous champ électrique.

La structure S₁ peut avantageusement comporter deux films polarisés F₁ et F₂ de matériau polymère piézoélectrique, les sens de polarisation desdits films étant opposés. Comme il sera explicité ultérieurement une telle configuration confère à la structure une sensibilité piézoélectrique accrue.

Typiquement, la carte selon l'invention peut comprendre des informations inscrites sur une face avec un élément dit fenêtre, inséré au niveau de la carte ou une ouverture (0) correspondant à une double fenêtre permettant de vérifier la carte par transparence. Cette fenêtre est située au niveau de la structure S₁ et est en mesure de passer d'un état optique I non transparent à un état optique II laissant apparaître une information permettant de contrôler l'authenticité de la carte.

La présente invention sera mieux comprise et d'autres avantages apparaîtront à la lecture de la description qui va suivre donnée à titre non limitatif et des figures annexées parmi lesquelles :
- la figure 1 illustre un exemple de carte selon l'invention ;
   * la figure 1a schématise une vue de dessous
   * la figure 1b schématise une coupe de la carte
- la figure 2 illustre la flexion d'un exemple de structure S₁ utilisant deux films de matériau piézoélectrique de polarisation opposée ;
- la figure 3 illustre la réalisation d'un exemple de structure S₁ utilisant deux films de matériau piézoélectrique de polarisation opposée, par colaminage et polarisation simultanés ;
- la figure 4 illustre un exemple de carte selon l'invention utilisant un peigne d'électrodes interdigitées pour adresser le matériau de la structure S₂ ;
- la figure 5 illustre un exemple d'électrodes présentant une architecture particulière pour adresser le matériau de la structure S₂ ;
- la figure 6 schématise le comportement d'un matériau composite à base de polymère dans lequel sont dispersées des billes de cristal liquide, inséré dans l'exemple de carte illustré à la figure 4.

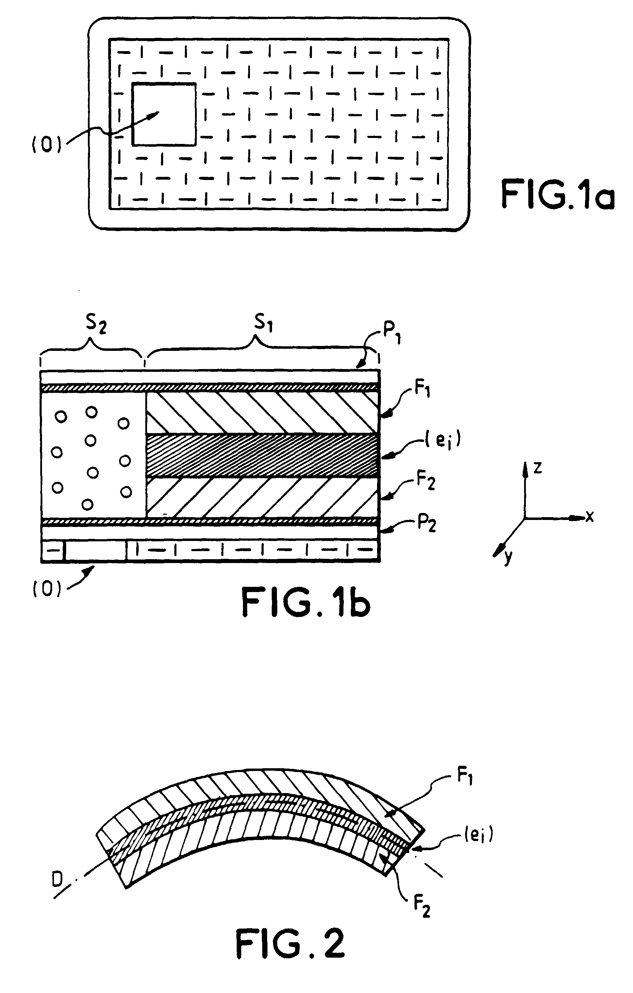

La carte souple selon l'invention peut avantageusement comprendre une structure S₁ et une structure S₂, juxtaposées dans un même plan comme l'illustre la figure 1b. Ce type de configuration permet l'emploi d'un matériau piézoélectrique transparent ou non, l'effet de transparence étant alors uniquement recherché localement au niveau de la structure S₂. La carte souple illustrée aux figures 1a et 1b est constituée par deux substrats souples en plastique P₁ et P₂ recouverts d'électrodes transparentes pouvant être en oxyde d'indium et d'étain. La structure S₁ peut être composée de deux films minces de polymère piézoélectrique de polarisation opposée et séparés par une électrode intermédiaire et souple.

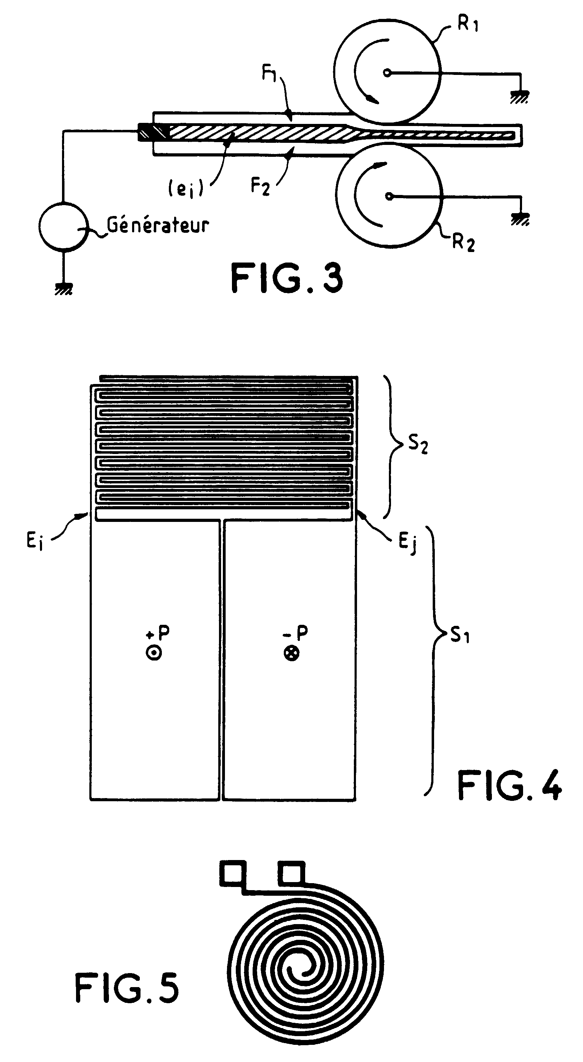

Ainsi lors de la flexion de la carte et donc de la flexion de la structure S₁, on obtient un film F₁ en extension et un film F₂ en contraction comme l'illustre la figure 2. Les coefficients piézoélectriques perpendiculaires à l'axe de la déformation D, et de part et d'autre de cet axe de déformation D peuvent être cumulés grâce aux polarisations opposées des films F₁ et F₂ et ce contrairement au cas d'un film unique de matériau piézoélectrique homogène dont l'axe de déformation se situe au centre. Typiquement cet ensemble de deux films minces de polymère piézoélectrique peut être réalisé par laminage. Plus exactement pour obtenir la structure S₁ résultant de l'association des deux films F₁ et F₂ séparés par une électrode intermédiaire (ei) nécessaire à l'opération de polarisation, on peut dans un premier temps réaliser préalablement sur deux lames en polymère, une électrode conductrice. Ces lames sont alors pressées entre elles et l'on obtient un ensemble constitué par lesdites lames séparées par une électrode centrale (ei). Dans un second temps on peut opérer en une seule étape le laminage et la polarisation de cet ensemble pour aboutir à la structure finale S₁. La figure 3 illustre cette opération. L'ensemble est passé au laminoir constitué principalement par deux rouleaux conducteurs R₁ et R₂ et tournant dans le sens indiqué par les flèches. Pour obtenir des polarisations rémanentes de sens opposés par rapport à l'électrode intermédiaire (ei), on peut mettre les deux rouleaux au potentiel de la masse.

La structure S₁ ainsi obtenue peut être insérée entre les électrodes des substrats P₁ et P₂ dont la dimension selon l'axe x est supérieure à celle de la structure S₁. On peut alors introduire par capillarité un mélange liquide monomère, cristal liquide, ledit monomère étant photopolymérisable et le polymère ainsi formé étant non miscible avec le cristal liquide. La structure S₂, ainsi réalisée, est constituée de polymère dans lequel sont comprises des billes de cristal liquide. Sur l'un des substrats souples est disposé un revêtement comportant un ensemble d'indications et dans lequel peut être aménagée une fenêtre ou ouverture (o) révélatrice du changement d'état optique de la carte souple. En effet en absence de flexion de la carte l'ensemble (S₂) est diffusant voire obscur si des molécules de colorant ont été introduites au niveau du cristal liquide, l'ouverture (o) est donc un élément neutre de la carte ne fournissant pas d'informations particulières. En flexion de la carte, et donc des films de matériau piézoélectrique, il apparaît des charges surfaciques au niveau de P₁ et P₂ qui vont adresser les molécules cristal liquide et les orienter pour fournir un état transparent, conduisant à une ouverture (o) transparente. Il est possible d'adjoindre en regard de la fenêtre (o) une information particulière, uniquement révélée en flexion et située au niveau du substrat opposé.

Typiquement, la structure S₁ peut comprendre un bimorphe de PVDF composé de deux films d'épaisseur 25 µm, dont la flexion permet de développer une tension voisine de 50 V. Cette tension rapportée sur un échantillon de 2 cm² et d'épaisseur 50 µm de polymère dans lequel sont dispersées des billes de cristal liquide permet d'obtenir le changement d'état : état diffusant/état transparent.

Pour complexifier le dispositif selon l'invention afin d'éviter la falsification de cartes officielles, il est possible de créer des changements d'état optique, plus sophistiqués grâce à l'introduction d'un élément supplémentaire difficile à reproduire.

Il est ainsi possible d'élaborer au niveau de la structure S₂, un réseau d'amplitude de lignes d'électrodes métalliques très fines et de pas typiquement voisin d'une dizaine de microns, ledit réseau étant réalisé au niveau de l'ouverture (o). Ainsi l'état transparent devient un état diffractant permettant de faire apparaître plusieurs images correspondant aux ordres de diffraction et non plus une image unique comme dans l'exemple précédent. La réalisation d'un tel réseau, nécessite des technologies lourdes, faisant appel à des opérations de gravures et de masquage. La réalisation de telles cartes devient alors fastidieuse, limitant les contrefaçons possibles, mais n'altère en rien le contrôle simple et immédiat de la validité de la carte.

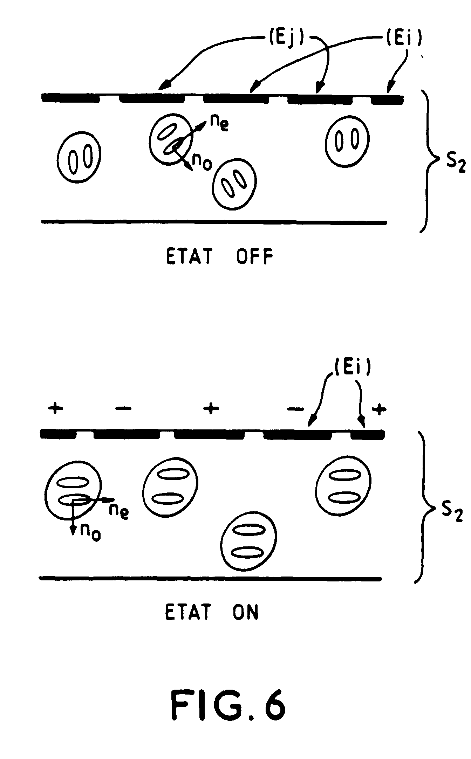

Il est aussi possible de réaliser un réseau d'électrodes interdigitées permettant d'orienter les molécules cristal liquide non plus perpendiculairement au plan des substrats P₁ et P₂ mais parallèlement audit plan. La figure 4 illustre un exemple de carte utilisant ce type d'électrodes. Pour commander les deux séries d'électrodes Eᵢ et Eⱼ, on réalise deux sortes de domaines de matériau piézoélectrique de polarisations opposées +P et -P, et situés dans un même plan et non plus dans des plans superposés. Avec une telle configuration, lors de la flexion de la carte il apparaît des lignes de champ électrique horizontales. La figure 5 illustre une autre architecture possible d'électrodes continues, dont un seul défaut au niveau d'une des électrodes permet de ne plus pouvoir faire fonctionner le dispositif de contrôle de la carte. Cette caractéristique rend plus délicate une éventuelle contrefaçon de la carte selon l'invention. La figure 6 illustre à cet égard le comportement des molécules cristal liquide soumises à un tel champ. Une des polarisations de la lumière se trouve transmise, l'autre étant diffusée contrairement au cas où les molécules cristal liquide sont orientées perpendiculairement au substrat (les deux polarisations sont transmises). On se trouve alors en présence de la superposition d'une image nette et d'une image diffusée.

Le dispositif selon l'invention peut également avantageusement comprendre un réseau de phase élaboré au niveau du matériau électrooptique. Dans le cas d'une matrice polymère, on peut réaliser par des techniques de microlithographie (pas de quelques microns) des sillons dans le polymère, remplis par du cristal liquide. Les molécules de cristal liquide typiquement nématiques sont alors orientées dans les sillons réalisés et dans un plan horizontal. Le cristal liquide peut être choisi de telle sorte que son indice ordinaire soit égal à celui du polymère et que l'indice extraordinaire réalise la condition de phase annulant l'ordre 0. La lumière incidente peut être décomposée en somme de deux polarisations orthogonales, l'une parallèle au pas du réseau, l'autre perpendiculaire à celui-ci.

Ainsi l'une des poalrisations n'est pas affectée par le réseau, l'autre étant diffractée majoritairement sur les ordres +1 et -1 selon deux directions D₁ et D₂.

En superposant à ce réseau un deuxième réseau orthogonal au premier, la polarisation non affectée précédemment est alors diffractée dans deux directions D'₁ et D'₂ orthogonales aux directions D₁ et D₂, l'autre polarisation traversant le deuxième réseau, sans être modifiée.

Cette superposition de réseaux donne lieu à quatre images. Avec ce jeu de deux réseaux croisés, il est donc possible de commuter électriquement entre un état diffractant sans ordre zéro créant quatre images et un état transparent.

La carte souple selon l'invention peut également avantageusement comprendre un circuit logique intégré entre le générateur piézoélectrique et l'élément de visualisation. Ce circuit peut être programmé de manière à créer une réponse intelligente pouvant être de type clignotement et permettant de complexifier la réponse attendue durant l'opération de vérification de validité de la carte.

## Revendications

1. Carte souple, équipée d'un dispositif de contrôle de validité, le dispositif de contrôle comportant inserée entre des électrodes souples (P₁, P₂), une première structure (S₁) comprenant au moins une couche de matériau piézoélectrique (F₁, F₂) et capable de générer des charges sous l'effet, d'une contrainte de type pression, caractérisée en ce que le dispositif de contrôle de la carte comporte en outre :
- une seconde structure (S₂) capable de commuter électriquement entre deux états optiques en réponse auxdites charges,
- lesdites première et seconde structures (S₁ et S₂) étant connectées électriquement afin de transférer lesdites charges générées par la première structure au niveau de la seconde structure (S₂).

2. Carte souple selon la revendication 1, caractérisée en ce que les structures (S₁ et S₂) sont juxtaposées dans un même plan.

3. Carte souple selon l'une des revendications 1 ou 2, caractérisée en ce que la seconde structure (S₂) comporte un matériau composite à base de polymère dans lequel sont dispersées des molécules de cristal liquide.

4. Carte souple selon l'une des revendications 1 à 3, caractérisée en ce que la première structure (S₁) comporte deux films polarisés (F₁ et F₂) de polymère piézoélectrique, le sens de polarisation desdits films étant opposés.

5. Carte souple selon la revendication 4, caractérisée en ce que le polymère piézoélectrique est de type polyfluorure de vinylidène.

6. Carte souple selon l'une des revendications 1 à 5, caractérisée en ce que les électrodes souples (P₁ et P₂) sont des substrats souples transparents, recouverts d'un film mince conducteur transparent.

7. Carte souple selon l'une des revendications 2 à 5, caractérisée en ce que la seconde structure (S₂) est insérée entre une électrode continue transparente et un réseau de lignes conductrices réalisé sur un substrat souple transparent, de manière à définir un réseau de diffraction.

8. Carte souple selon l'une des revendications 2 à 5, caractérisée en ce que la seconde structure (S₂) est insérée entre une électrode continue transparente, et un réseau d'électrodes interdigitées (Eᵢ et Eⱼ), la première structure (S₁) comprenant dans un même plan au moins un ensemble de deux éléments de matériau piézoélectrique polarisés respectivement (+P et -P), l'un (+P) des éléments de matériau piézoélectrique étant relié à l'une (Eᵢ) des électrodes interdigitées, l'autre (-P) des éléments de matériau piézoélectrique étant relié à l'autre (Eⱼ) des électrodes interdigitées.

9. Carte souple selon l'une des revendications 2 à 5, caractérisée en ce que la seconde structure (S₂) comporte deux réseaux de phase, superposés et croisés.

10. Carte souple selon la revendication 9, caractérisée en ce que les réseaux de phase sont constitués par des inclusions périodiques de cristal liquide au sein de films de polymère gravés périodiquement.

11. Carte souple selon l'une des revendications 1 à 10, caractérisée en ce que la seconde structure (S₂) est connectée électriquement à la première structure (S₁) par l'intermédiaire d'un circuit logique.

## Patentansprüche

1. Biegsame Karte, die mit einer Einrichtung zur Gültigkeitskontrolle ausgestattet ist, wobei die Kontrolleinrichtung zwischen biegsame Elektroden (P₁, P₂) eingeführt eine erste Struktur (S₁) mit wenigstens einer Schicht (F₁, F₂) aus piezoelektrischem Material aufweist, die in der Lage ist, unter der Wirkung einer Druckbelastung Ladungen zu erzeugen, dadurch gekennzeichnet, daß die Kontrolleinrichtung der Karte ferner folgendes aufweist:
- eine zweite Struktur (S₂), die in der Lage ist, in Reaktion auf die Ladungen zwischen zwei optischen Zuständen elektrisch umzuschalten,
- wobei die erste und die zweite Struktur (S₁ und S₂) elektrisch verbunden sind, um die von der ersten Struktur erzeugten Ladungen auf die Ebene der zweiten Struktur (S₂) zu übertragen.

2. Biegsame Karte nach Anspruch 1, dadurch gekennzeichnet, daß die beiden Strukturen (S₁ und S₂) in ein und derselben Ebene nebeneinander angeordnet sind.

3. Biegsame Karte nach einem der Ansprüche 1 oder 2, dadurch gekennzeichnet, daß die zweite Struktur (S₂) ein Verbundmaterial auf Polymerbasis aufweist, in dem Flüssigkristallmoleküle dispergiert sind.

4. Biegsame Karte nach einem der Ansprüche 1 bis 3, dadurch gekennzeichnet, daß die erste Struktur (S₁) zwei polarisierte Filme (F₁ und F₂) aus einem piezoelektrischen Polymeren aufweist, wobei die Polarisationsrichtung der Filme entgegengesetzt ist.

5. Biegsame Karte nach Anspruch 4, dadurch gekennzeichnet, daß das piezoelektrische Polymere vom Typ Polyvinylidenfluorid ist.

6. Biegsame Karte nach einem der Ansprüche 1 bis 5, dadurch gekennzeichnet, daß die biegsamen Elektroden (P₁, P₂) transparente biegsame Substrate sind, die mit einem transparenten leitfähigen Dünnfilm überdeckt sind.

7. Biegsame Karte nach einem der Ansprüche 2 bis 5, dadurch gekennzeichnet, daß die zweite Struktur (S₂) zwischen eine transparente kontinuierliche Elektrode und ein Netz von Leitern eingefügt ist, das auf einem transparenten biegsamen Substrat realisiert ist, um ein Beugungsgitter zu bilden.

8. Biegsame Karte nach einem der Ansprüche 2 bis 5, dadurch gekennzeichnet, daß die zweite Struktur (S₂) zwischen eine transparente kontinuierliche Elektrode und ein Netz von kammartig ineinandergreifenden Elektroden (Eᵢ und Eⱼ) eingefügt ist, wobei die erste Struktur (S₁) in ein und derselben Ebene wenigstens eine Einheit aus zwei polarisierten Elementen (+P bzw. -P) aus piezoelektrischem Material aufweist, wobei das eine Element (+P) aus piezoelektrischem Material mit der einen (Eᵢ) der kammartig ineinandergreifenden Elektroden verbunden ist und das andere Element (-P) aus piezoelektrischem Material mit der anderen (Eⱼ) der kammartig ineinandergreifenden Elektroden verbunden ist.

9. Biegsame Karte nach einem der Ansprüche 2 bis 5, dadurch gekennzeichnet, daß die zweite Struktur (S₂) zwei übereinandergelegte und gekreuzte Phasengitter aufweist.

10. Biegsame Karte nach Anspruch 9, dadurch gekennzeichnet, daß die Phasengitter durch periodische Flüssigkristalleinschlüsse im Inneren von Polymerfilmen gebildet sind, die periodisch geätzt sind.

11. Biegsame Karte nach einem der Ansprüche 1 bis 10, dadurch gekennzeichnet, daß die zweite Struktur (S₂) über eine Logikschaltung elektrisch mit der ersten Struktur (S₁) verbunden ist.

## Claims

1. Flexible card, equipped with a device for checking validity, the checking device including, inserted between flexible electrodes (P₁, P₂), a first structure (S₁) comprising at least one layer of piezoelectric material (F₁, F₂) which can generate charges under the effect of a stress of the compressive type, characterized in that the device for checking the card furthermore includes:
- a second structure (S₂) which can electrically switch between two optical states in response to the said charges,
- the said first and second structures (S₁ and S₂) being electrically connected in order to transfer the said charges generated by the first structure to the second structure (S₂).

2. Flexible card according to Claim 1, characterized in that the structures (S₁ and S₂) are juxtaposed in the same plane.

3. Flexible card according to one of Claims 1 and 2, characterized in that the second structure (S₂) includes a composite material based on polymer in which liquid-crystal molecules are dispersed.

4. Flexible card according to one of Claims 1 to 3, characterized in that the first structure (S₁) includes two polarized films (F₁ and F₂) of piezoelectric polymer, the polarization direction of the said films being opposite ones.

5. Flexible card according to Claim 4, characterized in that the piezoelectric polymer is of the polyvinylidene fluoride type.

6. Flexible card according to one of Claims 1 to 5, characterized in that the flexible electrodes (P₁, P₂) are transparent flexible substrates covered with a transparent conducting thin film.

7. Flexible card according to one of Claims 2 to 5, characterized in that the second structure (S₂) is inserted between a transparent continuous electrode and a network of conducting lines which is formed on a transparent flexible substrate, so as to define a diffraction grating.

8. Flexible card according to one of Claims 2 to 5, characterized in that the second structure (S₂) is inserted between a transparent continuous electrode, and a network of interdigital electrodes (Eᵢ and Eⱼ), the first structure (S₁) comprising, in the same plane, at least one set of two piezoelectric-material elements which are respectively polarized (+P and -P), one (+P) of the piezoelectric-material elements being connected to one (Eᵢ) of the interdigital electrodes, the other (-P) of the piezoelectric-material elements being connected to the other (Eⱼ) of the interdigital electrodes.

9. Flexible card according to one of Claims 2 to 5, characterized in that the second structure (S₂) includes two phase gratings which are superimposed and crossed.

10. Flexible card according to Claim 9, characterized in that the phase gratings consist of periodic liquid-crystal inclusions within periodically etched polymer films.

11. Flexible card according to one of Claims 1 to 10, characterized in that the second structure (S₂) is electrically connected to the first structure (S₁) by means of a logic circuit.
